# EUROPEAN PATENT SPECIFICATION

(11) **EP 4 146 933 B1**
(45) Date of publication and mention of the grant of the patent: **29.04.2026**
(21) Application number: 21725699.9
(22) Date of filing: 06.05.2021
(51) Int. Cl.: F03D 13/10, F03D 13/20

(54) **A WIND TURBINE TOWER ASSEMBLY DEVICE FOR MAKING A WIND TURBINE TOWER**
WINDTURBINENTURMMONTAGEVORRICHTUNG ZUR HERSTELLUNG EINES WINDTURBINENTURMS
DISPOSITIF D'ASSEMBLAGE DE TOUR D'ÉOLIENNE DESTINÉ À LA FABRICATION DE TOUR D'ÉOLIENNE

(30) Priority: 07.05.2020 DK PA202070296
(43) Date of publication of application: 15.03.2023
(73) Proprietor: VESTAS WIND SYSTEMS A/S, 8200 Aarhus N (DK)
(72) Inventor: BAUN, Torben Ladegaard, 8541 Skødstrup (DK)
(74) Representative: Vestas Patents Department
(86) International application number: PCT/DK2021/050143
(87) International publication number: WO 2021/223828

(56) References cited:
- EP-A1- 1 518 053
- EP-A1- 3 247 899
- EP-A2- 2 475 883
- US-A1- 2010 199 487

## Description

### INTRODUCTION

The present disclosure relates to a device for making a wind turbine tower.

The disclosure further relates to a nacelle for a wind turbine and including the device, and to a method of making a wind turbine tower.

### BACKGROUND

Wind turbines increase in size in terms of nominal power output as well as in terms of physical dimensions of the individual parts of the wind turbine. As a consequence, the size of the tower increases and transport and assembly operations become more complicated.

EP1518053 A1 discloses an example of a tower assembly device for a wind turbine.

### SUMMARY

It is an object of embodiments of the disclosure to facilitate transport and assembly and in wind turbine manufacturing, to allow improved assembly conditions and potentially to increase safety and working conditions.

For these and other purposes, embodiments of the disclosure, in a first aspect, provides a wind turbine tower assembly device comprising a tower interface configured to be attached to a wind turbine tower during construction of the wind turbine tower. The device comprises a nacelle interface which can be attached to a part of a nacelle of a wind turbine, e.g. to the main frame of the nacelle and particularly to a yaw arrangement of the main frame. The interface may thereby be arranged to place the nacelle above a free end of the wind turbine tower to which the device is attached.

The device comprises a lifting structure configured to move the nacelle interface relative to the tower interface to create a space between the free end of the wind turbine tower and the nacelle interface. A unit receiving structure is configured to insert a tower unit into the space, and a tower assembly structure is configured for joining the tower unit to the free end of the tower.

The device facilitates efficient assembly of towers for wind turbines.

The tower interface, the nacelle interface, and the lifting structure may form part of a strand jack or similar crawling structure, and particularly they may form part of a structure having a clamp structure arranged to clamp about a surface, particularly an outer surface, of the tower at axially offset upper and lower tower locations. The clamp structure may be power operated, e.g. by electric or hydraulic power, may include power actuated, e.g. hydraulic or electric, actuators, and they may include different structures for fixing to the tower, e.g. friction pads being pressed against the surface. The crawling structure may also include a caterpillar walking structure configured to change a distance between the upper and lower locations where the clamps engage the tower. The crawling structure may further include a controller configured to provide a repeated procedure of releasing the clamp at one of the upper and lower locations while maintaining the clamping at the other one of the upper and lower locations, changing the distance between the upper and lower locations, clamping the tower by use of the released clamp, and repeating the procedure to provide a caterpillar like walking along the wind turbine tower.

The tower assembly structure is configured for joining the tower unit to the free end of the tower. In one embodiment, the tower units are fitted with bolt flanges, and the assembly structure includes necessary tools for bolting such flanges. In another embodiment, the tower units are to be joined by welding or riveting, and the assembly structure comprises welding equipment or riveting equipment. Particularly, the assembly structure may comprise a welding robot for full automatic seam welding, and the welding robot may particularly comprise 2, 3, or 4 independent welding guns arranged at a certain distance to enable simultaneous welding at different locations along the periphery of the intersection between the free end of the tower and the tower unit. The assembly structure may further comprise seam preparation equipment e.g. configured to cut or mill a specific groove shape for welding, e.g. a V-groove shape.

An encapsulation extending in the space and forming an enclosed area in the space ensures better working conditions and a controllable climate. The encapsulation may e.g. be a steel encapsulation, tarp encapsulation, an encapsulation made of panels of steel or polymer material etc. The encapsulation may e.g. be tubular to provide an essentially uniform distance from an outer surface of the tower to an inner surface of the encapsulation. In the encapsulation, different working areas may be defined. In one example, the encapsulation forms a working area for workers, e.g. for inspecting the welding or for manually welding or manual riveting of tower units onto the free end of the tower.

A partition structure may facilitate separation of the enclosed area into an upper enclosed area and a lower enclosed area. a welding area, e.g. for manual welding or for robotised welding may be formed in one of the enclosed areas, particularly in the upper enclosed area. A surface treatment unit for treatment of the wind turbine tower e.g. by abrasive cleaning and painting etc. may be provided in the other enclosed area, particularly in the lower enclosed area. Automatic or manually operated equipment may be provided for final quality inspection of the welding and/or the surface treatment.

In a further embodiment the encapsulation may comprise additional partitioning structures to facilitate further separation of the enclosed area into additional enclosed areas to separate the various treatment types and facilities of the tower assembly structure.

A compartment may be provided as a part of the assembly device. The compartment may form accommodation for objects such as workers, tools, or spare parts.

The tower assembly device can be supported solely by the tower or in combination with external support legs that are build up during construction of the tower. For that purpose, the tower assembly device may comprise a support structure which can be reconfigured to adapt to the increasing tower height during making of the tower. The support structure may comprise rigid legs, e.g. telescopic legs, and/or wires attached to form a cable stayed tower. For example, the wires are attached to winches that are temporarily fixed to the ground. When the tower assembly device crawls upwards the winches give out wire and then holds firm when the device is in operation.

In a second aspect, the disclosure provides a wind turbine nacelle comprising a main unit housing a main frame supporting a rotor assembly, the rotor assembly defining a rotation axis and the main unit being arranged to be mounted on the wind turbine tower via the main frame, the wind turbine further comprising at least one tower assembly device of the kind described above and connected to the main unit and extending below the main frame.

The tower assembly device comprises:
- a tower interface configured to be attached to the wind turbine tower during construction of the wind turbine tower,
- a lifting structure configured to lift the main unit interface relative to the tower interface to create a space between a free end of the tower and the main frame,
- a unit receiving structure configured to enter a tower unit into the space, and
- tower assembly means configured for joining the tower unit to the free end of the tower.

The tower assembly unit may be releasable from the main unit to allow reuse of the tower assembly unit for construction of different wind turbines.

The tower assembly unit may comprise any of the features mentioned already relative to the first aspect of the disclosure.

In accordance with the second aspect of the disclosure, the wind turbine nacelle may be prepared in advance. This could be either at a factory site or on the ground at the site where the wind turbine is under construction. Since the nacelle is pre-fitted with an assembly device, the construction and assembly work around the tower can be minimized which supports efficient wind turbine manufacturing.

In a third aspect, the disclosure provides a method of constructing a wind turbine generator at a construction site by use of an assembly device of the kind described relative to the first aspect of the disclosure. The method comprises:
- attaching the device between a main frame of a nacelle and the wind turbine tower;
- lifting the nacelle relative to the wind turbine tower to create a space between a free end of the wind turbine tower and the nacelle,
- inserting a tower unit into the space, and
- joining the tower unit to the free end of the tower.

The nacelle may form a main unit and at least one auxiliary unit, the main unit and the auxiliary unit being separate parts, and the main frame may form part of the main unit. The nacelle may further comprise a drive train and any operative component for converting wind energy into electrical power for a power grid. According to the method, the main unit and the auxiliary unit are assembled after the tower unit is joined to the free end of the tower, and optionally any other component of the drive train or energy conversion may be assembled after the tower unit is joined to the free end of the tower.

To facilitate easier transportation, steel blanks, i.e. plate shaped elements are transported to the construction site. Such blanks can be stacked on a cargo vessel such as a truck or train, and may easily be transported. At the construction site, the blanks are curled up such that opposite free ends of the blanks are joined to form tubular units. Such units are typically referred to in the literature as "cans", and the opposite free ends are typically joined by welding. The tower unit can be made with a single plate height or consist of a number of single height units stacked and welded to each other to constitute a taller tower unit to be inserted in the unit receiving structure.

The tower, the nacelle, and/or the tower assembly device may comprise a damper to dampen vortex-induced vibrations.

### LIST OF DRAWINGS

In the following, embodiments of the disclosure will be described in further details with reference to the drawing in which:
Fig. 1 illustrates a wind turbine;
Fig. 2 illustrates an assembly device;
Fig. 3 illustrates a tower interface;
Fig. 4 illustrates a nacelle interface;
Fig. 5 illustrates an assembly device in operation;
Fig. 6 illustrates an assembly device;
Figs. 7-8 illustrate an embodiment where the nacelle comprises a main unit and one or more auxiliary units;
Figs. 9-16 illustrate details of a procedure to assemble the tower and subsequently the nacelle to reduce weight of the nacelle during tower construction.

### DESCRIPTION OF EMBODIMENTS

The detailed description and specific examples, while indicating embodiments, are given by way of illustration only, since various changes and modifications within the scope of this disclosure will become apparent to those skilled in the art from this detailed description.

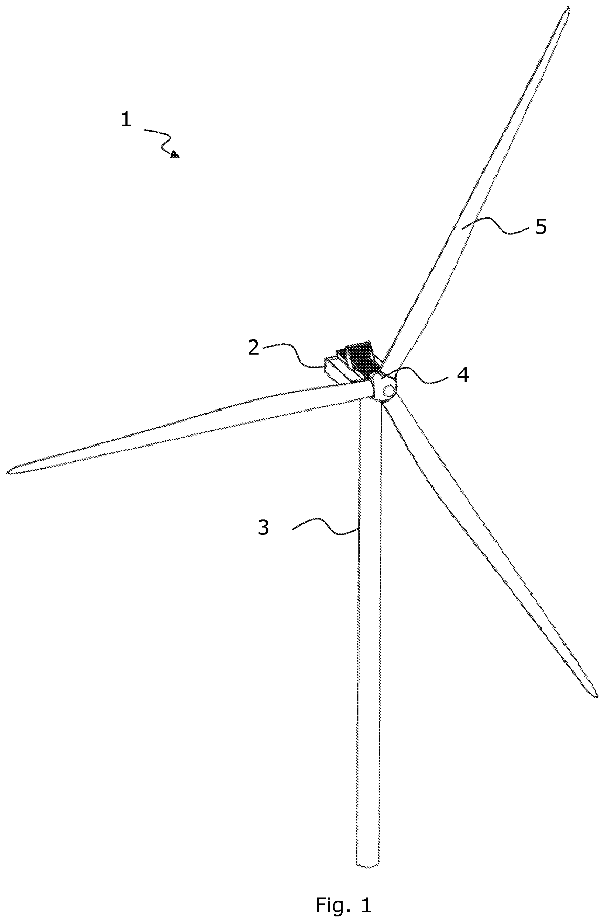

Fig. 1 illustrates a wind turbine 1 with a nacelle 2 mounted on a tower 3. A hub 4 carrying three rotor blades 5 is mounted at the nacelle 2. The nacelle supports a rotor-supporting assembly inside the nacelle. Typically, the rotor-supporting assembly comprises a rotor shaft connecting a gear arrangement and a generator to the hub 4.

The tower is typically assembled from a number of round sections of steel extending between flanges which are bolted to flanges of adjacent sections. Each section is often made from round units, also known as cans, which are welded to adjacent units. The cross section of the tower is often tapered in the direction from the bottom towards the top of the tower.

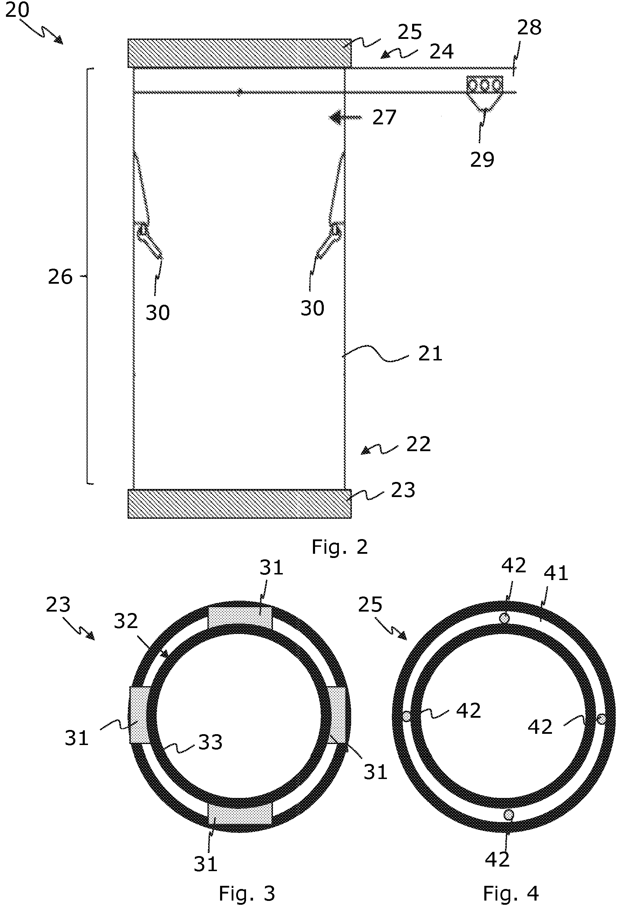

Fig. 2 illustrates a wind turbine tower assembly device 20 for making wind turbine towers. The device 20 comprises a chassis 21. In a bottom end 22 of the chassis 21, the device 20 forms a tower interface 23 which is illustrated in a cross section in Fig. 3. The tower interface 23 is arranged to be attached to a wind turbine tower during construction of the wind turbine tower 3 and comprises a number of claw elements 31 (shown in Fig. 3). The claw elements 31 are arranged to clamp about an outer surface 32 of the tower 33. Such claw elements may include power actuated, e.g. hydraulic or electric, actuators and friction pads being pressed against the outer surface 32 or a strand jack lifting system, e.g. forming a hollow cylinder, e.g. hydraulically actuated, and having steel cables passing through an open centre of the cylinder. The cables may pass through two clamps - one mounted to either end of the cylinder. This structure enables operation in a caterpillar's walking manner and thereby allows climbing along the strands by the repeated procedure of releasing the clamp at one end, expanding the cylinder, clamping there, releasing the trailing end, contracting, and clamping the trailing end.

In an embodiment, the surface of the tower 33 has indentations or protrusions that provide an interface for the claw or clamp elements to attach to.

At a top end 24 of the chassis 21, the device 20 comprises a nacelle interface 25. The nacelle interface 25 is illustrated in further details in Fig. 4 and may e.g. comprise a flange 41 with bolt holes 42 arranged for bolting onto a flange of a yaw assembly of the nacelle 2. In that way, the nacelle interface 25 can be attached to a part of a nacelle 2 of the wind turbine 1 which is under construction.

The chassis 21 extends between the tower interface 23 and the nacelle interface 25, and the nacelle interface 25 is thereby arranged to place the nacelle above a free end of a wind turbine tower.

A lifting structure (not shown) is configured to move the nacelle interface relative to the tower interface to create a space 26 (illustrated by the bracket) between the free end of the wind turbine tower and the nacelle interface. The lifting structure may e.g. be comprised in the aforementioned strand jack lifting system.

The device is arranged to receive tower units 53 which are to be attached to the tower. The arrow 27 indicates a window in which a unit receiving structure can insert tower units into the space 26. The unit receiving structure may include the illustrated hoisting structure 28 by which the tower unit can be lifted from ground and inserted into the space. In the illustrated embodiment, the hoisting structure is constituted by a cantilever beam with a pulley structure mounted on a trolley 29. In the illustrated external position of the trolley, the tower units can be hoisted along an external tower surface until reaching a sideways window into the space. In this altitude, the trolley is moved as illustrated by the arrow 27 and the tower unit enters into the space.

The tower assembly structure includes an assembly structure, in this embodiment constituted by the welding assembly comprising one or more welding robots with welding guns 30 fixed to a rotating assembly allowing the welding robots to rotate about the outer surface of the tower. By this structure, the tower unit can be welded to the free end of the tower. Additionally or alternatively, the assembly structure may comprise any suitable structure for bolting, riveting, gluing or other ways of assembly.

In an embodiment the chassis 21 comprises a platform (not illustrated) from where personnel can perform welding manually and/or inspect the welding performed by the welding robots.

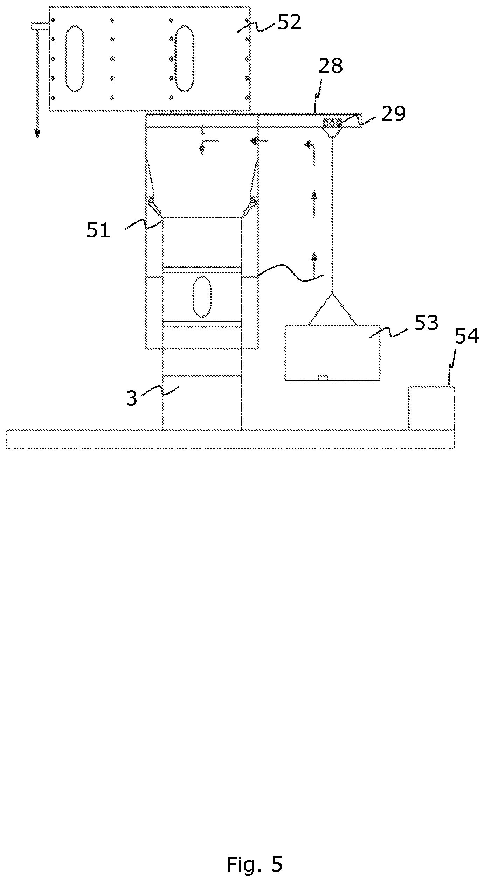

Fig. 5 illustrates a device 20 when in operation and being attached between a free end 51 of a tower and a part 52 of a nacelle. In the illustrated situation, the tower unit 53 is being hoisted from ground and will follow the path indicated by the arrows. The tower unit 53 is provided by the unit provider 54. The unit provider is a local manufacturing site configured to receive plane panels in the form of metal sheets and to curl up these sheets to form tubular elements with opposite free ends of the sheets being arranged against each other. The unit provider may be configured for assembling the free ends, e.g. by welding to form the units for the tower assembly.

In the space, the tower unit is lowered onto the free end of the tower, and an internal tower assembly structure joins the tower unit to the free end of the tower. Particularly, the tower assembly structure may include the welding assembly mentioned previously.

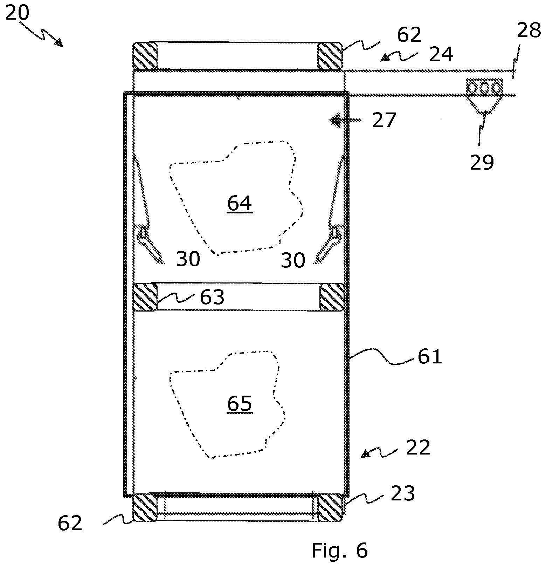

Fig. 6 illustrates an embodiment of the assembly device 20 including an encapsulation 61 forming an enclosed area in the space. The encapsulation 61 may be formed by a tarp or by more ridged wall structures, e.g. formed by a tubular steel wall. The encapsulation may form a shielding which is sufficiently closed to enable a controlled climate in the enclosed area, e.g. a controllable temperature or humidity. An environmental control system including a dehumidifier may be provided in the encapsulation.

In one embodiment, the encapsulation comprises air cushions or bellow structures 62 at the top end 24 and at the bottom end 23. These cushion or bellow structures are configured to expand into contact with an outer surface of the tower or tower unit and thereby provide a sealed enclosed area in which temperature and humidity can more easily be controlled.

A partition wall formed by the inflatable bellow 63 which can be inflated into contact with an outer surface of the tower may separate the enclosed area into an upper enclosed area 64 and a lower enclosed area 65.

The assembly structure, illustrated by the welding guns 30, may be housed in the upper enclosed area 64, and the lower enclosed area 65 may contain a surface treatment unit for treatment of the wind turbine tower. In one example, such a surface treatment unit includes abrasive cleaning equipment, painting equipment and paint curing equipment etc. In this way, a completely finished and surface treated interface between each tower unit may be created in the enclosed area.

One or more platforms (not shown) for personnel working in the device may be provided at appropriate locations to allow access to the tower structure as needed.

In Fig. 5, the assembly device is attached between a part of the nacelle, herein referred to as the main unit of the nacelle, and the free end of the tower. This is an alternative to lifting the entire nacelle during tower erection. According to this method, the nacelle is assembled after the tower is finished.

When the tower is finished, the main unit is fixed to the tower via a yaw assembly. Subsequently, the nacelle is completed by lifting further nacelle components and attaching them to the main unit. In one such embodiment, the nacelle is constituted by a main unit and one or more auxiliary units, each having e.g. the shape of a standard container for shipping.

The partly assembled nacelle can for example be used for equipment storage, storage of supplies, i.e. surface treatments, as a temporary workshop and/or accommodation for personnel during construction of the tower structure.

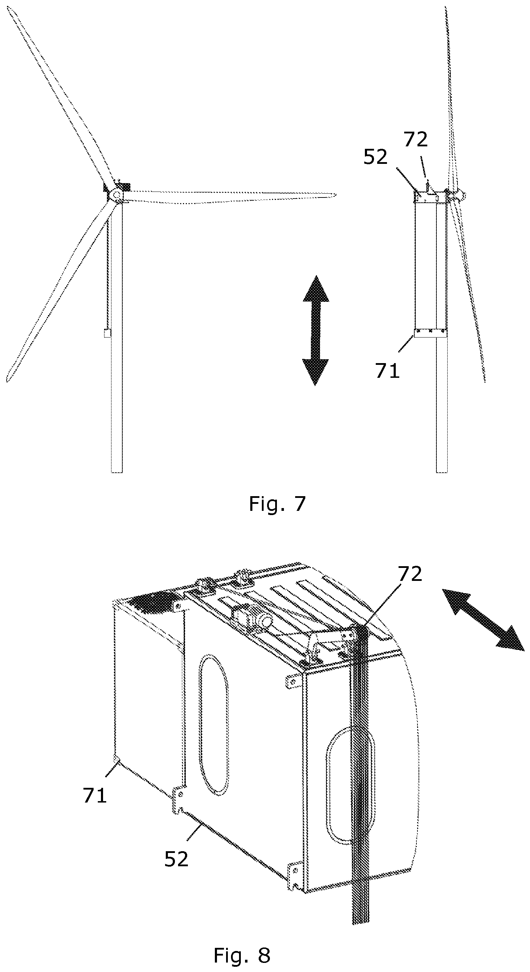

Fig. 7 illustrates hoisting of an auxiliary unit 71 up or down, e.g. if an auxiliary unit is used for a specific period of time during assembly of the wind turbine or during maintenance etc. The auxiliary unit 71 is hoisted by use of an internal crane 72 forming part of the main unit 52. Movement is essentially only in the vertical plane, illustrated by the arrow.

Fig. 8 illustrates the internal crane 72 in an enlarged view. The crane is attached to a roof part of the main unit. The internal crane can hoist the auxiliary unit in a vertical direction to a position where it is fixed to the main unit.

In accordance with the embodiment where the nacelle is constituted by a main unit and one or more auxiliary units, the assembly procedure may include that a first tower unit is installed on a foundation. The tower interface of an assembly device described herein is attached to the first tower unit, and a main unit of the nacelle is attached to the nacelle interface of the assembly device. The internal crane 72 on the main unit is used for hoisting tower units and the assembly device is used for assembling the tower units to the free end of the tower, and to lift the main unit to create space for the tower units to be inserted between the free end and the main unit. When the tower is finished, the crane 72 is used as indicated on Figs. 7-8 to lift the auxiliary units and assemble them with the main unit to form the nacelle. In this way, the lifting structure of the tower assembly device will not need to lift the weight of a complete nacelle but only the weight of the main unit. Additionally, that main unit can be essentially empty or the heavy components, e.g. the drive train components, may be installed after the tower is finished. This will further reduce the required lifting capacity of the lifting structure of the tower assembly device.

One or more of the auxiliary units may contain separate cranes which, once the auxiliary unit is mounted on the main unit, can be used for lifting components from ground to the nacelle, e.g. for final assembly of the wind turbine or during maintenance.

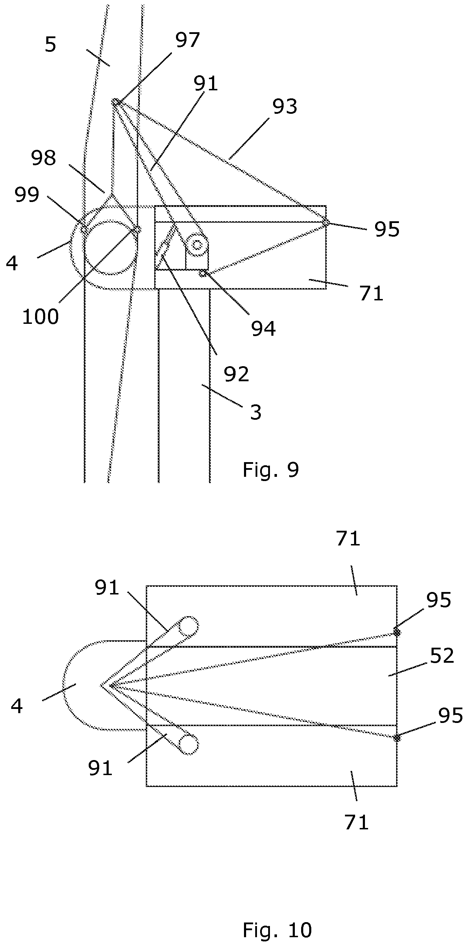

Figs. 9-10 illustrate an embodiment where the nacelle comprises a main unit and two auxiliary units 71. Each auxiliary unit contains a crane. Each crane 91 comprises a crane arm which can be lifted by the piston 92. The crane line 93 runs from a winch 94 around a pulley 95 placed at the rear end of the auxiliary unit 71. From the pulley, the crane line 93 extends to the top pulley 97 at the end of the crane arm and ends in a spreader which separates the hoisting point 98 into two hoisting points 99, 100 attached to the hub or to the blades for lifting and assembling the hub to the rotor supporting assembly in the main unit. The crane can comprise any known form of crane including any kind of support column or crane arm, and with or without articulation ability for the arm. The crane may include a jib, e.g. attached to the crane in a manner known from tower cranes, and the crane arm may be expandable, e.g. in a telescopic way.

Fig. 10 illustrates an embodiment where the cranes 91 in both auxiliary units 71 are used in combination for lifting the hub.

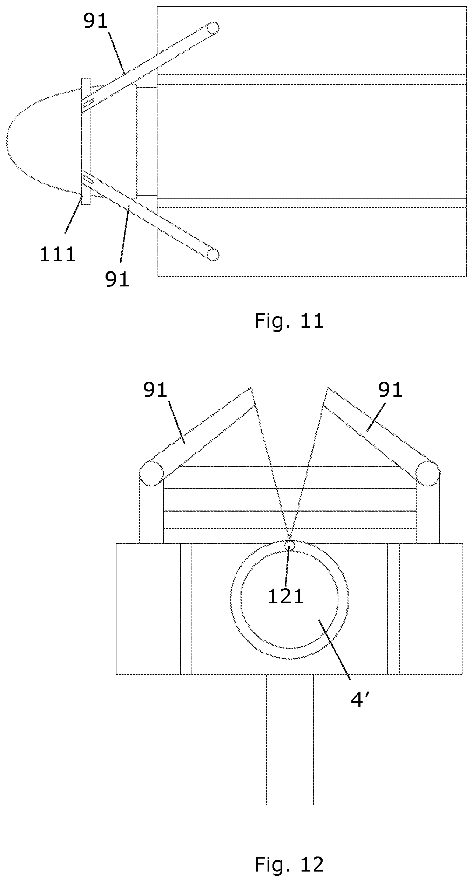

Fig. 11 illustrates a lifting method where two cranes 96 cooperate in the lifting of the hub 4 via a lifting bracket 111.

Fig. 12 illustrates a lifting method where two cranes 91 cooperate in the lifting of the hub 4 directly at one common lifting point, e.g. formed by a lifting lug 121 attached to the hub.

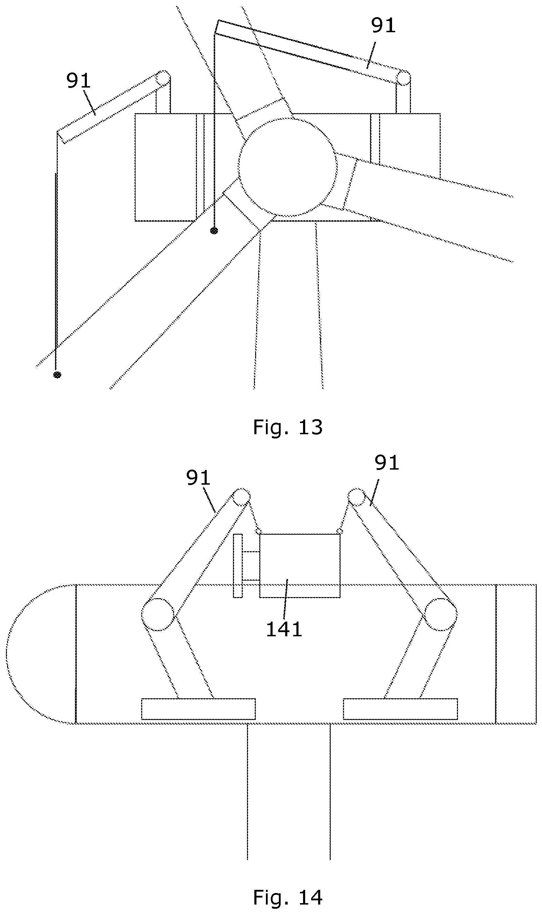

Fig. 13 illustrates a lifting method where two cranes 91 work in collaboration on blade lifting.

Fig. 14 illustrates an assembly method where components in the nacelle are inserted into the nacelle and installed after the nacelle is fitted on the tower. In this lifting method, two cranes 91 cooperate in lifting a gearbox, a generator, or similar component 141 of the drive train. In this procedure, the component is lifted from ground to the top of the tower and lifted sideways into the nacelle. In a maintenance situation, the opposite procedure may include lowering the component to the ground after they have been lifted out of the nacelle. The two cranes may be located in the same auxiliary unit, in this case a service unit on the left side of the main unit.

In any of the embodiments illustrated in Figs. 7-14, the required lifting capacity of the lifting structure of the tower assembly unit can be reduced by assembling the nacelle after the tower is finished such that the lifting structure of the tower assembly unit only needs to lift the main unit including a crane which can be used both for lifting tower units during tower assembly and for lifting auxiliary units for completing the nacelle when the tower is made.

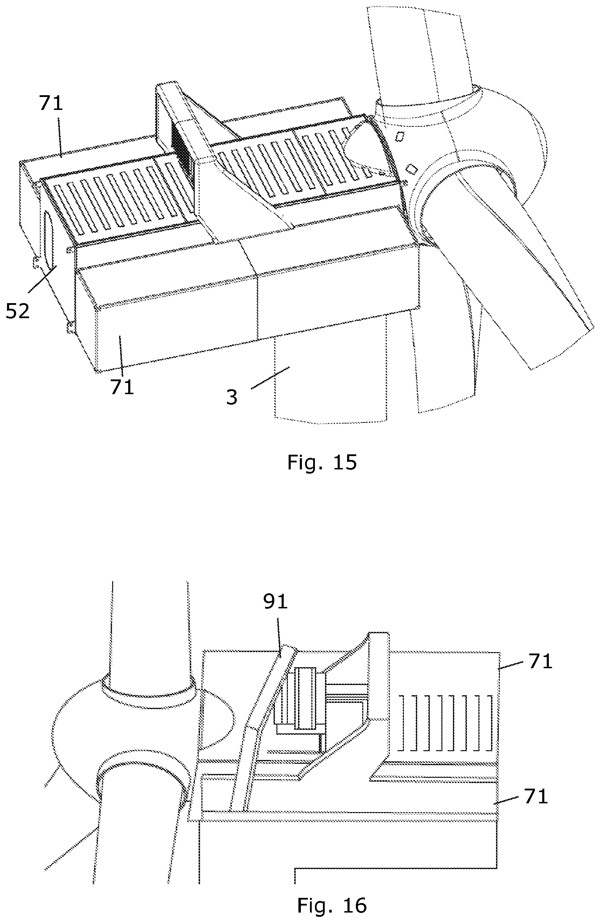

Fig. 15 illustrates the finished nacelle. The auxiliary unit 71 may e.g. facilitate accommodation of crew members working on the assembly of the wind turbine.

Fig. 16 illustrates an auxiliary unit accommodating a crane 91 for further assembly work.

In one embodiment, the crane 91 is used for lifting the tower unit 53 from the ground and thereby for assisting the unit receiving structure. In this embodiment, the unit receiving structure may be reduced simply to an opening into the space 26 through which opening, the crane 91 may lift the tower unit 53. In this embodiment, the wind turbine tower assembly device may comprise no lifting capacity for lifting the tower units.

In other embodiments, the crane 91 is used for supporting the lifting of the tower unit 53 from the ground, and the unit receiving structure may comprise complementary support, lifting or handling means configured for supporting entry of the tower unit into an opening into the space 26. In this procedure, the crane 91 may e.g. provide a vertical lift and support, lifting or handling means forming part of the unit receiving structure may e.g. provide horizontal movement of the tower unit into the space 26.

## Claims

1. A wind turbine tower assembly device (20) comprising:
- a tower interface (23) configured to be attached to a wind turbine tower (3) during construction of the wind turbine tower;
- a nacelle interface (25) configured to be attached to a part of a nacelle (2) of a wind turbine (1) and arranged to place the nacelle above a free end of a wind turbine tower which is attached to the tower interface;
- a lifting structure configured to move the nacelle interface relative to the tower interface to create a space between the free end of the wind turbine tower and the nacelle interface;
- a unit receiving structure (26, 28, 29) configured to insert a tower unit (53) into the space (26); and
- a tower assembly structure (30) configured for joining the tower unit (53) to the free end (51) of the tower (3), **characterized in that** it comprises an encapsulation (61) extending in the space and forming an enclosed area (64, 65) in the space.

2. The device according to claim 1, comprising a partition structure (63) separating the enclosed area into an upper enclosed area (64) and a lower enclosed area (65).

3. The device according to any of the preceding claims, wherein the tower assembly structure comprises a welding robot (30) for automatic welding of a seam between the free end of the tower and the tower unit.

4. The device according to any of the preceding claims, comprising a surface treatment unit for surface treatment of the wind turbine tower.

5. The device according to claims 2-4, wherein the partition structure (63) separates the welding robot (30) from the surface treatment unit.

6. The device according to any of the preceding claims, further comprising a crawling structure configure to release the tower interface from the wind turbine tower, and reattach the tower interface at another location on the wind turbine tower.

7. The device according to any of the preceding claims, further comprising a compartment forming accommodation for objects.

8. A wind turbine nacelle (2) comprising a main unit (52) housing a main frame supporting a rotor assembly, the rotor assembly defining a rotation axis and the main unit being arranged to be mounted on a wind turbine tower (3) via the main frame, the wind turbine further comprising at least one wind turbine tower assembly device (20) in accordance with any one of the preceding claims, connected to the main unit (52) and extending below the main frame.

9. The nacelle according to claim 8, wherein the tower assembly unit (20) is releasable from the main unit (52).

10. A method of constructing a wind turbine generator at a construction site by use of a wind turbine tower assembly device according to any of claims 1-7, the method comprising:
- attaching the wind turbine tower assembly device (20) between a main frame of a nacelle (2) and the wind turbine tower (3);
- lifting the nacelle relative to the wind turbine tower to create a space (26) between a free end of the wind turbine tower and the nacelle,
- inserting a tower unit (53) into the space, and
- joining the tower unit to the free end of the tower.

11. The method according to claim 10, wherein the nacelle forms a main unit and at least one auxiliary unit, the main unit and the auxiliary unit being separate parts, and the main frame forms part of the main unit, and wherein the main unit and the auxiliary unit are assembled after the tower unit is joined to the free end of the tower.

12. The method according to claim 10 or 11, wherein the nacelle includes components being operative for transforming wind energy into electrical energy, and wherein at least one or more of these components are assembled after the tower unit is joined to the free end of the tower.

13. The method according to any of claims 10 - 12, comprising transporting blanks to the construction site, and forming, at the construction site, tower units for insertion into the space by bending the blanks and joining opposite free ends of the blanks.

## Patentansprüche

1. Windkraftanlagenturm-Montagevorrichtung (20), umfassend:
- eine Turmschnittstelle (23), die so konfiguriert ist, dass sie an einem Windkraftanlagenturm (3) während der Errichtung des Windkraftanlagenturms befestigt wird;
- eine Gondelschnittstelle (25), die so konfiguriert ist, dass sie an einem Teil einer Gondel (2) einer Windkraftanlage (1) befestigt wird und so angeordnet ist, dass die Gondel über einem freien Ende eines Windkraftanlagenturms positioniert wird, der an der Turmschnittstelle befestigt ist;
- eine Hebestruktur, die so konfiguriert ist, dass sie die Gondelschnittstelle relativ zur Turmschnittstelle bewegt, um einen Raum zwischen dem freien Ende des Windkraftanlagenturms und der Gondelschnittstelle zu schaffen;
- eine Einheitsaufnahmestruktur (26, 28, 29), die so konfiguriert ist, dass sie eine Turmeinheit (53) in den Raum (26) einsetzt; und
- eine Turmmontagestruktur (30), die so konfiguriert ist, dass sie die Turmeinheit (53) an das freie Ende (51) des Turms (3) fügt, **dadurch gekennzeichnet, dass** sie eine sich in den Raum erstreckende Kapselung (61) umfasst, die einen umschlossenen Bereich (64, 65) im Raum bildet.

2. Vorrichtung nach Anspruch 1, umfassend eine Trennstruktur (63), die den umschlossenen Bereich in einen oberen umschlossenen Bereich (64) und einen unteren umschlossenen Bereich (65) unterteilt.

3. Vorrichtung nach einem der vorstehenden Ansprüche, wobei die Turmmontagestruktur einen Schweißroboter (30) zum automatischen Verschweißen einer Naht zwischen dem freien Ende des Turms und der Turmeinheit umfasst.

4. Vorrichtung nach einem der vorstehenden Ansprüche, umfassend eine Oberflächenbehandlungseinheit zur Oberflächenbehandlung des Windkraftanlagenturms.

5. Vorrichtung nach den Ansprüchen 2-4, wobei die Trennstruktur (63) den Schweißroboter (30) von der Oberflächenbehandlungseinheit trennt.

6. Vorrichtung nach einem der vorstehenden Ansprüche, weiter umfassend eine Kriechstruktur, die so konfiguriert ist, dass sie die Turmschnittstelle vom Windkraftanlagenturm löst und die Turmschnittstelle an einer anderen Stelle am Windkraftanlagenturm wieder befestigt.

7. Vorrichtung nach einem der vorstehenden Ansprüche, weiter umfassend ein Fach zur Aufnahme von Gegenständen.

8. Windkraftanlagengondel (2), umfassend eine Haupteinheit (52), die einen Hauptrahmen zum Stützen einer Rotoranordnung beherbergt, wobei die Rotoranordnung eine Rotationsachse definiert und die Haupteinheit so angeordnet ist, dass sie über den Hauptrahmen an einem Windkraftanlagenturm (3) angebracht wird, wobei die Windkraftanlage weiter mindestens eine Windkraftanlagenturm-Montagevorrichtung (20) nach einem der vorstehenden Ansprüche umfasst, die mit der Haupteinheit (52) verbunden ist und sich unterhalb des Hauptrahmens erstreckt.

9. Gondel nach Anspruch 8, wobei die Turmmontageeinheit (20) von der Haupteinheit (52) abnehmbar ist.

10. Verfahren zum Errichten einer Windkraftanlage auf einer Baustelle unter Verwendung einer Windkraftanlagenturm-Montagevorrichtung nach einem der Ansprüche 1-7, wobei das Verfahren Folgendes umfasst:
- Befestigen der Windkraftanlagenturm-Montagevorrichtung (20) zwischen einem Hauptrahmen einer Gondel (2) und dem Windkraftanlagenturm (3);
- Anheben der Gondel relativ zum Windkraftanlagenturm, um einen Raum (26) zwischen einem freien Ende des Windkraftanlagenturms und der Gondel zu schaffen,
- Einsetzen einer Turmeinheit (53) in den freien Raum, und
- Fügen der Turmeinheit an das freie Ende des Turms.

11. Verfahren nach Anspruch 10, wobei die Gondel eine Haupteinheit und mindestens eine Hilfseinheit bildet, wobei die Haupteinheit und die Hilfseinheit separate Teile sind und der Hauptrahmen Teil der Haupteinheit ist, und wobei die Haupteinheit und die Hilfseinheit montiert werden, nachdem die Turmeinheit an das freie Ende des Turms gefügt wurde.

12. Verfahren nach Anspruch 10 oder 11, wobei die Gondel Komponenten einschließt, die zur Umwandlung von Windenergie in elektrische Energie dienen, und wobei mindestens eine oder mehrere dieser Komponenten montiert werden, nachdem die Turmeinheit an das freie Ende des Turms gefügt wurde.

13. Verfahren nach einem der Ansprüche 10-12, umfassend das Transportieren von Rohlingen zur Baustelle und das Formen, auf der Baustelle, von Turmeinheiten zum Einsetzen in den Raum durch Biegen der Rohlinge und Aneinanderfügen der gegenüberliegenden freien Enden der Rohlinge.

## Revendications

1. Dispositif d'assemblage de tour éolienne (20), comprenant :
- une interface de tour (23) configurée pour être fixée à une tour éolienne (3) lors de la construction de la tour éolienne ;
- une interface de nacelle (25) configurée pour être fixée à une partie d'une nacelle (2) d'une éolienne (1) et agencée pour placer la nacelle au-dessus d'une extrémité libre d'une tour éolienne qui est fixée à l'interface de tour ;
- une structure de portance configurée pour déplacer l'interface de nacelle par rapport à l'interface de tour afin de créer un espace entre l'extrémité libre de la tour éolienne et l'interface de nacelle ;
- une structure de réception d'unité (26, 28, 29) configurée pour insérer une unité de tour (53) dans l'espace (26) ; et
- une structure d'assemblage de tour (30) configurée pour joindre l'unité de tour (53) à l'extrémité libre (51) de la tour (3), **caractérisé en ce qu'**il comprend un encapsulage (61) s'étendant dans l'espace et formant une zone fermée (64, 65) dans l'espace.

2. Dispositif selon la revendication 1, comprenant une structure de cloison (63) séparant la zone fermée en une zone fermée supérieure (64) et une zone fermée inférieure (65).

3. Dispositif selon l'une quelconque des revendications précédentes, dans lequel la structure d'assemblage de tour comprend un robot de soudage (30) pour le soudage automatique d'une jonction entre l'extrémité libre de la tour et l'unité de tour.

4. Dispositif selon l'une quelconque des revendications précédentes, comprenant une unité de traitement de surface pour un traitement de surface de la tour éolienne.

5. Dispositif selon les revendications 2-4, dans lequel la structure de cloison (63) sépare le robot de soudage (30) de l'unité de traitement de surface.

6. Dispositif selon l'une quelconque des revendications précédentes, comprenant en outre une structure rampante configurée pour libérer l'interface de tour à partir de la tour éolienne et rattacher l'interface de tour au niveau d'un autre emplacement sur la tour éolienne.

7. Dispositif selon l'une quelconque des revendications précédentes, comprenant en outre un compartiment servant de logement à des objets.

8. Nacelle d'éolienne (2) comprenant une unité principale (52) logeant un cadre principal supportant un ensemble rotor, l'ensemble rotor définissant un axe de rotation et l'unité principale étant conçue pour être montée sur une tour éolienne (3) via le cadre principal, l'éolienne comprenant en outre au moins un dispositif d'assemblage de tour éolienne (20) selon l'une quelconque des revendications précédentes, relié à l'unité principale (52) et s'étendant sous le cadre principal.

9. Nacelle selon la revendication 8, dans laquelle l'unité d'assemblage la tour (20) peut être libérée de l'unité principale (52).

10. Procédé de construction d'un aérogénérateur sur un site de construction au moyen d'un dispositif d'assemblage de tour éolienne selon l'une quelconque des revendications 1 à 7, le procédé comprenant :
- la fixation du dispositif d'assemblage de tour éolienne (20) entre un cadre principal d'une nacelle (2) et la tour éolienne (3) ;
- le levage de la nacelle par rapport à la tour éolienne pour créer un espace (26) entre une extrémité libre de la tour éolienne et la nacelle,
- l'insertion d'une unité de tour (53) dans l'espace, et
- la jonction de l'unité de tour à l'extrémité libre de la tour.

11. Procédé selon la revendication 10, dans lequel la nacelle forme une unité principale et au moins une unité auxiliaire, l'unité principale et l'unité auxiliaire étant des parties distinctes, et le cadre principal forme une partie de l'unité principale, et dans lequel l'unité principale et l'unité auxiliaire sont assemblées après que l'unité de tour soit jointe à l'extrémité libre de la tour.

12. Procédé selon la revendication 10 ou 11, dans lequel la nacelle inclut des composants destinés à transformer l'énergie éolienne en énergie électrique, et dans lequel au moins un ou plusieurs de ces composants sont assemblés après que l'unité de tour soit jointe à l'extrémité libre de la tour.

13. Procédé selon l'une quelconque des revendications 10-12, comprenant le transport d'ébauches sur le site de construction et la formation, sur le site de construction, d'unités de tour destinées à être insérées dans l'espace en pliant les ébauches et en joignant les extrémités libres opposées des ébauches.
